# EUROPEAN PATENT APPLICATION

(11) **EP 4 718 911 A1**
(43) Date of publication of application: **01.04.2026**
(21) Application number: 25199135.2
(22) Date of filing: 29.08.2025
(51) Int. Cl.: H04W 36/00, H04W 36/08, H04B 7/06

(54) **UNIFIED TCI STATES IN A CELL USING NON-UNIFIED TCI STATES**

(30) Priority: 29.09.2024 FI 20247138
(71) Applicant: Nokia Solutions and Networks Oy, 02610 Espoo (FI)
(72) Inventor: GOYAL, Sanjay, Denville, NJ (US); KOSKELA, Timo, Oulu (FI); RATOVELOMANANA, Frédéric, Paris (FR); GÜRSU, Halit Murat, Munich (DE); WOLZ, Benedikt Martin, Ulm (DE)
(74) Representative: Nokia EPO representatives

(57) **Abstract**

When lower layer mobility cell switch is used in a network having access nodes, or corresponding apparatuses, some of which not supporting unified TCI states and some supporting such states, to enable smooth cell switch from a cell to a cell not supporting TCI states, the latter is configured to generate, when unified TCI states are requested, mapping information mapping one or more non-unified TCI states to corresponding one or more unified TCI-states, store the information, and respond using a list of unified TCI state(s). The mapping information may be later used for reverse mapping.

## Description

### TECHNICAL FIELD

Various example embodiments relate to wireless communications.

### BACKGROUND

Communication systems are under constant development, including enhancement to existing features. For example, a handover process in which a serving cell of a moving device is changed may be performed using layer 3 (L3) measurements and radio resource control, RRC, signaling, or a lower layer mobility, also known as Layer 1/Layer 2 (L1/L2) triggered mobility (LTM), cell switch utilizing transmission configuration indicator, TCI, states, determined by candidate cells for transmissions and receptions with the device. The TCI states introduced at the time the lower layer mobility cell switch was introduced have been complemented to comprise unified TCI states. It is desirable to provide solutions enabling a device in a cell with a unified TCI state(s) to be switched smoothly to a cell that does not support unified TCI states.

### SUMMARY

The independent claims define the scope.

According to an aspect there is provided an apparatus comprising: at least one processor; and at least one memory storing instructions that, when executed by the at least one processor, cause the apparatus to at least: provide at least a cell configured to use non-unified transmission configuration indicator, TCI, states; receive a request for unified TCI states in the cell for a lower layer mobility cell switch of a device; determine at least one non-unified TCI state for the device; generate, per a non-unified TCI state, mapping information mapping parameters in the non-unified TCI state to a corresponding unified TCI state comprising mapped parameters; store the mapping information; and transmit in a response to the request a list of corresponding unified TCI states.

In embodiments, the at least one memory and computer program code are configured to, with the at least one processor, further cause the apparatus to use for the corresponding unified TCI state the same identifier value that the non-unified TCI state has.

In embodiments, the at least one memory and computer program code are configured to, with the at least one processor, further cause the apparatus to use for the corresponding unified TCI state an identifier value that does not depend on an identifier value the non-unified TCI state has, and to store the identifier values to the mapping information.

In embodiments, the at least one memory and computer program code are configured to, with the at least one processor, further cause the apparatus to : receive a notification that the device is to be switched to the cell, the notification indicating at least one unified TCI state; use the mapping information to determine, per an indicated unified TCI state, a corresponding non-unified TCI state for the device; and configure the cell to apply in information exchange with the device the corresponding non-unified TCI states.

In embodiments, the at least one memory and computer program code are configured to, with the at least one processor, further cause the apparatus to schedule uplink (UL) and downlink (DL) transmissions according to the corresponding non-unified TCI states.

In embodiments, the request for unified TCI states in the cell is a handover request or a context setup request or a context modification request.

In embodiments, the at least one memory and computer program code are configured to, with the at least one processor, further cause the apparatus to apply at least one predefined rule when generating the mapping information.

According to an aspect there is provided a method comprising at least: receiving, by an apparatus providing at least a cell configured to use non-unified transmission configuration indicator, TCI, states, a request for unified TCI states in the cell for a lower layer mobility cell switch of a device; determining, by the apparatus, at least one non-unified TCI state for the device; generating, by the apparatus, per a non-unified TCI state, mapping information mapping parameters in the non-unified TCI state to a corresponding unified TCI state comprising mapped parameters; storing, by the apparatus, the mapping information; and transmitting, by the apparatus, in a response to the request a list of corresponding unified TCI states.

In embodiments, the method further comprises: receiving, by the apparatus, a notification that the device is to be switched to the cell, the notification indicating at least one unified TCI state; using, by the apparatus, the mapping information to determine, per an indicated unified TCI state, a corresponding non-unified TCI state for the device; and configuring, by the apparatus, the cell to apply in information exchange with the device the corresponding non-unified TCI states.

In embodiments, the method further comprises: scheduling, by the apparatus, UL and DL transmissions according to the corresponding non-unified TCI states.

According to an aspect there is provided a computer readable medium comprising program instructions which, when executed by an apparatus providing at least a cell configured to use non-unified transmission configuration indicator, TCI, states, cause the apparatus to perform at least: determining, in response to receiving a request for unified TCI states in the cell for a lower layer mobility cell switch of a device, at least one non-unified TCI state for the device; generating, per a non-unified TCI state, mapping information mapping parameters in the non-unified TCI state to a corresponding unified TCI state comprising mapped parameters; storing, by the apparatus, the mapping information; and causing transmitting, in a response to the request a list of corresponding unified TCI states.

In embodiments, the computer readable medium further causes the apparatus to perform: using, when receiving a notification that the device is to be switched to the cell, the notification indicating at least one unified TCI state, the mapping information to determine, per an indicated unified TCI state, a corresponding non-unified TCI state for the device; and configuring the cell to apply in information exchange with the device the corresponding non-unified TCI states.

In embodiments, the computer readable medium is a non-transitory computer readable medium.

According to an aspect there is provided a computer program comprising instructions which, when executed by an apparatus, cause the apparatus to perform at least: determining, in response to receiving a request for unified TCI states in the cell for a lower layer mobility cell switch of a device, at least one non-unified TCI state for the device; generating, per a non-unified TCI state, mapping information mapping parameters in the non-unified TCI state to a corresponding unified TCI state comprising mapped parameters; storing, by the apparatus, the mapping information; and causing transmitting, in a response to the request a list of corresponding unified TCI states.

In embodiments, the computer program further causes the apparatus to perform: using, when receiving a notification that the device is to be switched to the cell, the notification indicating at least one unified TCI state, the mapping information to determine, per an indicated unified TCI state, a corresponding non-unified TCI state for the device; and configuring the cell to apply in information exchange with the device the corresponding non-unified TCI states.

### BRIEF DESCRIPTION OF DRAWINGS

Embodiments are described below, by way of example only, with reference to the accompanying drawings, in which
Fig. 1 illustrates an exemplified high-level network architecture;
Fig. 2 illustrates an example functionality;
Fig. 3 illustrates an example functionality;
Fig. 4 illustrates an example of information exchange;
Fig. 5 illustrates an example of information exchange;
Fig. 6 illustrates an example of information exchange;
Fig. 7 is a schematic block diagram; and
Fig. 8 is a schematic block diagram.

### DETAILED DESCRIPTION OF SOME EMBODIMENTS

The following embodiments are only presented as examples. Although the specification may refer to "an", "one", or "some" embodiment(s) and/or example(s) in several locations, this does not necessarily mean that each such reference is to the same embodiment(s) or example(s), or that a particular feature only applies to a single embodiment and/or single example. Single features of different embodiments and/or examples may also be combined to provide other embodiments and/or examples. Furthermore, words "comprising" and "including" should be understood as not limiting the described embodiments to consist of only those features that have been mentioned and such embodiments may contain also features/structures that have not been specifically mentioned.

Some example embodiments described herein may be implemented in a wireless communication network comprising a radio access network based on one or more of the following radio access technologies (RATs): global system for mobile communications (GSM) or any other second generation (2G) radio access technology, universal mobile telecommunication system (UMTS, 3G) based on basic wideband-code division multiple access (W-CDMA), high-speed packet access (HSPA), long term evolution (LTE), LTE-Advanced, fourth generation (4G), fifth generation (5G), 5G new radio (NR), 5G-Advanced, or sixth generation (6G), or beyond. Some examples of radio access networks include the universal mobile telecommunications system (UMTS) radio access network (UTRAN), the evolved universal terrestrial radio access network (E-UTRA), or the next generation radio access network (NG-RAN). The wireless communication network may further comprise a core network, and some example embodiments may also be applied to network functions of the core network.

It should be noted that the embodiments are not restricted to the wireless communication network given as an example, but a person skilled in the art may also apply the solution to other wireless communication networks or systems provided with necessary properties. For example, some example embodiments may also be applied to a communication system based on IEEE 802.11 specifications, or a communication system based on IEEE 802.15 specifications. IEEE is an abbreviation for the Institute of Electrical and Electronics Engineers.

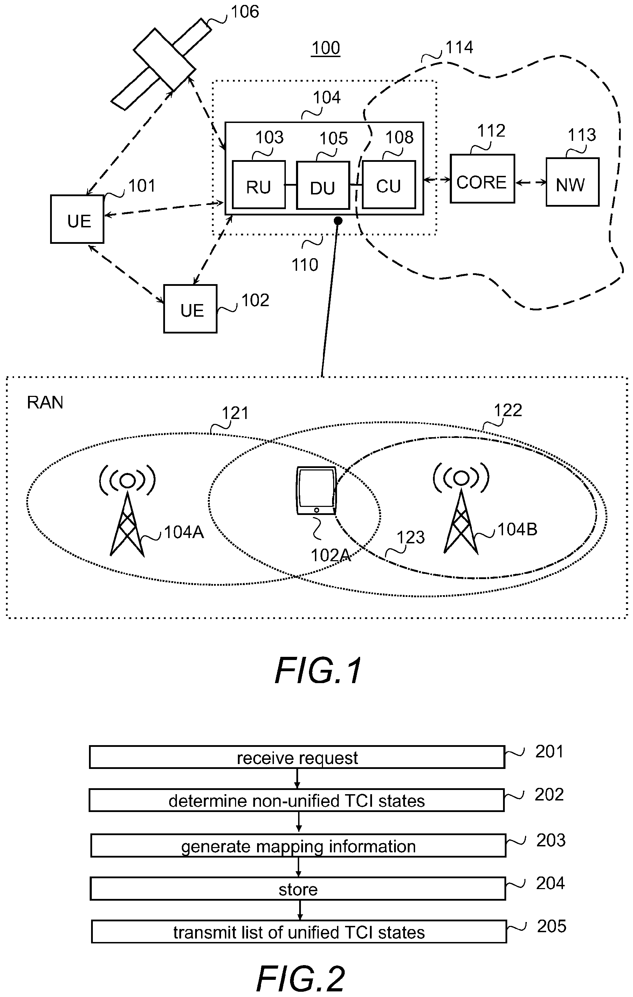

Fig. 1 depicts an example of a simplified wireless communication network architecture showing some physical and logical entities with a zoom in view in a part of an exemplifying radio access network. The connections shown in Fig. 1 may be physical connections or logical connections. It is apparent to a person skilled in the art that the wireless communication network may also comprise other physical and logical entities than those shown in Fig. 1. Below the general part is described first and then the zoom in view.

The example wireless communication network shown in Fig. 1 includes a radio access network (RAN) 110 and a core network 112.

Fig.1 shows user equipment (UE) 101, 102, configured to be in a wireless connection on one or more communication channels in a radio cell with an access node 104 of a radio access network 110.

The access node 104 may comprise a computing device configured to control the radio resources of the access node 104 and to be in a wireless connection with one or more UEs 101, 102. The access node 104 may also be referred to as a base station, a base transceiver station (BTS), an access point, a cell site, a network node, a radio access network node, or a RAN node. In this description, the terms "access node" and "radio access network node" may be used interchangeably.

The access node 104 may be, for example, an evolved NodeB (abbreviated as eNB or eNodeB), or a next generation evolved NodeB (abbreviated as ng-eNB), or a next generation NodeB (abbreviated as gNB or gNodeB), a split gNB, a transmission-reception point, a donor node in integrated access and backhaul (IAB), a fixed IAB node, a mobile IAB node, i.e. an apparatus or device providing the radio cell. The access node 104 may include or be coupled to transceivers. From the transceivers of the access node 104, a connection may be provided to an antenna unit that establishes a bi-directional radio link to one or more UEs 101, 102. The antenna unit may comprise an antenna or antenna element, or a plurality of antennas or antenna elements.

The wireless connection (e.g., radio link) from a UE 101, 102 to the access node 104 may be called uplink (UL) or reverse link, and the wireless connection (e.g., radio link) from the access node 104 to the UE 101, 102 may be called downlink (DL) or forward link. A UE 101 may also communicate directly with another UE 102, and vice versa, via a wireless connection generally referred to as a sidelink (SL). It should be appreciated that the access node 104 or its functionalities may be implemented by using any node, host, server, access point or other entity suitable for providing such functionalities.

The radio access network may comprise more than one access node 104, in which case the access nodes may also be configured to communicate with one another over wired or wireless links. These links between access nodes may be used for transmitting (sending) and receiving control plane signaling and also for routing data from one access node to another access node.

The access node 104 may further be connected to a core network (CN) 112. The core network 112 may comprise an evolved packet core (EPC) network and/or a 5^{th} generation core network (5GC). The EPC may comprise network entities, such as a serving gateway (S-GW for routing and forwarding data packets), a packet data network gateway (P-GW) for providing connectivity of UEs to external packet data networks, and/or a mobility management entity (MME). The 5GC may comprise one or more network functions, such as at least one of: a user plane function (UPF), an access and mobility management function (AMF), a location management function (LMF), and/or a session management function (SMF).

The core network 112 may also be able to communicate with one or more external networks 113, such as a public switched telephone network or the Internet, or utilize services provided by them. For example, in 5G wireless communication networks, the UPF of the core network 112 may be configured to communicate with an external data network via an N6 interface. In LTE wireless communication networks, the P-GW of the core network 112 may be configured to communicate with an external data network.

It should also be understood that the distribution of functions between core network operations and access node operations may differ in future wireless communication networks compared to that of the LTE or 5G, or even be non-existent.

The illustrated UE 101, 102 is one type of an apparatus to which resources on the air interface may be allocated and assigned. The UE 101, 102 may also be called a wireless communication device, a subscriber unit, a mobile station, a remote terminal, an access terminal, a user terminal, a terminal device, or a user device, or shortly just a device, just to mention but a few names. The UE 101, 102 may be a computing device operating with or without a subscriber identification module (SIM), including, but not limited to, the following types of computing devices: a mobile phone, a smartphone, a personal digital assistant (PDA), a handset, a computing device comprising a wireless modem (e.g., an alarm or measurement device, etc.), a laptop computer, a desktop computer, a tablet, a game console, a notebook, a multimedia device, a reduced capability (RedCap) device, a wearable device (e.g., a watch, earphones or eyeglasses) with radio parts, a sensor comprising a wireless modem, a drone, a smart device, a mobile robot, an autonomous vehicle, or a computing device comprising a wireless modem integrated in a vehicle.

It should be appreciated that the UE 101, 102 may also be a nearly exclusive uplink-only device, of which an example may be a camera or video camera loading images or video clips to a network. The UE 101, 102 may also be a device having capability to operate in an Internet of Things (IoT) network, which is a scenario in which objects may be provided with the ability to transfer data over a network without requiring human-to-human or human-to-computer interaction.

The wireless communication network may also be able to support the usage of cloud services. In 5G, the wireless communication network may be a service based architecture in which components (elements, functional units) of the service based architecture are defined using network functions that may be cloudified network functions. A network function supports or hosts a collection of services and offers one or more services to other network functions in the network. The network functions may be deployed as microservices. A service consumer, or shortly a consumer, is a network function requesting, or subscribing, a service from another network function, which is a service producer, or shortly a producer, that provides the service as a reply (response) or a notification. For example, at least part of core network operations may be carried out as a cloud service (this is depicted in Fig. 1 by "cloud" 114). The UE 101, 102 may also utilize the cloud 114. In some applications, the computation for a given UE may be carried out in the cloud 114 or in another UE.

The wireless communication network may also comprise a central control entity, such as a network management system (NMS), or the like. The NMS is a centralized suite of software and hardware used to monitor, control, and administer the network infrastructure. The NMS is responsible for a wide range of tasks such as fault management, configuration management, security management, performance management, and accounting management. The NMS enables network operators to efficiently manage and optimize network resources, ensuring that the network delivers high performance, reliability, and security.

5G enables using multiple-input and multiple-output (MIMO) antennas in the access node 104 and/or the UE 101, 102, many more base stations or access nodes than an LTE network (a so-called small cell concept), including macro sites operating in co-operation with smaller stations and employing a variety of radio technologies depending on service needs, use cases and/or spectrum available. 5G wireless communication networks may support a wide range of use cases and related applications including video streaming, augmented reality, different ways of data sharing and various forms of machine-type applications, such as (massive) machine-type communications (mMTC), including vehicular safety, different sensors and real-time control.

In 5G wireless communication networks, access nodes and/or UEs may have multiple radio interfaces, such as below 6 gigahertz (GHz), centimeter wave (cmWave) and millimeter wave (mmWave), and also being integrable with legacy radio access technologies, such as LTE. Integration with LTE may be implemented, for example, as a system, where macro coverage may be provided by LTE, and 5G radio interface access may come from small cells by aggregation to LTE. In other words, a 5G wireless communication network may support both inter-RAT operability (such as interoperability between LTE and 5G) and inter-RI operability (inter-radio interface operability, such as between below 6GHz, cmWave, and mmWave).

5G wireless communication networks may also apply network slicing, in which multiple independent and dedicated virtual sub-networks (network instances) may be created within the same physical infrastructure to run services that have different requirements on latency, reliability, throughput and mobility.

In one embodiment, an access node 104 may comprise: a radio unit (RU) 103 comprising a radio transceiver (TRX), i.e., a transmitter (Tx) and a receiver (Rx); one or more distributed units (DUs) 105 that may be used for the so-called Layer 1 (L1) processing and real-time Layer 2 (L2) processing; and a central unit (CU) 108 (also known as a centralized unit) that may be used for non-real-time L2 and Layer 3 (L3) processing. The CU 108 may be connected to the one or more DUs 105 for example via an F1 interface. Such an embodiment of the access node 104 may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU 108 may be a logical node hosting radio resource control (RRC), service data adaptation protocol (SDAP) and/or packet data convergence protocol (PDCP), of the NR protocol stack for an access node 104. The CU 108 may comprise a control plane (CU-CP), which may be a logical node hosting the RRC and the control plane part of the PDCP protocol of the NR protocol stack for the access node 104. The CU 108 may further comprise a user plane (CU-UP), which may be a logical node hosting the user plane part of the PDCP protocol and the SDAP protocol of the CU for the access node 104.

The DU 105 may be a logical node hosting radio link control (RLC), medium access control (MAC) and/or physical (PHY) layers of the NR protocol stack for the access node 104. The operations of the DU 105 may be at least partly controlled by the CU 108. It should also be understood that the distribution of functions between the DU 105 and the CU 108 may vary depending on the implementation.

Cloud computing systems may also be used to provide the CU 108 and/or DU 105. A CU provided by a cloud computing system may be referred to as a virtualized CU (vCU). In addition to the vCU, there may also be a virtualized DU (vDU) provided by a cloud computing system. Furthermore, there may also be a combination, where the DU may be implemented on so-called bare metal solutions, for example application-specific integrated circuit (ASIC) or customer-specific standard product (CSSP) system-on-a-chip (SoC).

Edge cloud may be brought into the radio access network by utilizing network function virtualization (NFV) and software defined networking (SDN). Using edge cloud may mean access node operations to be carried out, at least partly, in a computing system operationally coupled to a remote radio head (RRH) or a radio unit (RU) 103 of an access node 104. It is also possible that access node operations may be performed on a distributed computing system or a cloud computing system located at the access node 104. Application of cloud RAN architecture enables RAN real-time functions being carried out at the radio access network (e.g., in a DU 105), and non-real-time functions being carried out in a centralized manner (e.g., in a CU 108).

5G (or new radio, NR) wireless communication networks may support multiple hierarchies, where multi-access edge computing (MEC) servers may be placed between the core network 112 and the access node 104. It should be appreciated that MEC may be applied in LTE wireless communication networks as well.

A 5G wireless communication network ("5G network") may also comprise a non-terrestrial communication network, such as a satellite communication network, to enhance or complement the coverage of the 5G radio access network. For example, satellite communication may support the transfer of data between the 5G radio access network and the core network 112, enabling more extensive network coverage. Possible use cases may include: providing service continuity for machine-to-machine (M2M) or Internet of Things (IoT) devices or for passengers on board of vehicles, or ensuring service availability for critical communications, and future railway, maritime, or aeronautical communications. Satellite communication may utilize geostationary earth orbit (GEO) satellite systems, but also low earth orbit (LEO) satellite systems, in particular mega-constellations (i.e., systems in which hundreds of (nano)satellites are deployed). A given satellite 106 in the mega-constellation may cover several satellite-enabled network entities that create on-ground cells. The on-ground cells may be created through an on-ground relay access node or by an access node located on-ground or in a satellite.

It is obvious for a person skilled in the art that the access node 104 depicted in Fig. 1 is just an example of a part of a radio access network, and in practice the radio access network may comprise a plurality of access nodes 104, the UEs 101, 102 may have access to a plurality of radio cells, and the radio access network may also comprise other apparatuses, such as physical layer relay access nodes or other entities. At least one of the access nodes may be a Home eNodeB or a Home gNodeB. A Home gNodeB or a Home eNodeB is a type of access node that may be used to provide indoor coverage inside a home, office, or other indoor environment.

Additionally, in a geographical area of a radio access network, a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The access node(s) 104 of Fig. 1 may provide any kind of these cells. A cellular radio network may be implemented as a multilayer access networks including several kinds of radio cells. In multilayer access networks, one access node may provide one kind of a radio cell or radio cells, and thus a plurality of access nodes may be needed to provide such a multilayer access network.

For fulfilling the need for improving performance of radio access networks, the concept of "plug-and-play" access nodes may be introduced. A radio access network, which may be able to use "plug-and-play" access nodes, may include, in addition to Home eNodeBs or Home gNodeBs, a Home Node B gateway (HNB-GW) (not shown in Fig. 1). An HNB-GW, which may be installed within an operator's radio access network, may aggregate traffic from a large number of Home eNodeBs or Home gNodeBs back to a core network 112 of the operator.

6G wireless communication networks are expected to adopt flexible decentralized and/or distributed computing systems and architecture and ubiquitous computing, with local spectrum licensing, spectrum sharing, infrastructure sharing, and intelligent automated management underpinned by mobile edge computing, artificial intelligence, short-packet communication and blockchain technologies. Key features of 6G may include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds.

The zoom in view in Fig. 1 depicts a part of the radio access network with greater accuracy, to describe a lower layer mobility cell switch of an UE 102A. 5G (e.g. 3GPP NR Release-15) introduced the lower layer mobility cell switch, called also an LTM cell switch. The LTM cell switch is a cell switch procedure, where UE's serving cell (PCell or PSCell) may be switched by the network, based on L1/L3 measurements, by transmitting a corresponding cell switch command, for example in MAC signaling, using MAC CE (MAC control element). At the time of the LTM cell switch, the UE 102A uses transmission configuration indicator, TCI, state, or TCI states, configured for serving cell procedures (e.g. beam management). A TCI state represents a set, or a specific set, of transmission parameters, including spatial relationships, that the UE uses for receiving DL transmissions or transmitting UL transmissions. A TCI state typically includes quasi co-location (QCL) information such as one or more of Doppler Spread, Doppler Shift, average delay, Delay Spread, Spatial Rx (reception) parameters and reference signal(s), RS(s), information. The UE 102A derives the QCL parameters from measurements on the specified reference signals, which are then applied to all transmissions and receptions associated with that TCI state. Before the LTM cell switch, the network may optionally activate one or more TCI state(s) for one or more candidate cells for early DL synchronization. Once a candidate cell TCI state is activated the UE 102A may start tracking the DL time/frequency synchronization using the reference signals associated with the activated TCI state(s). The UE102A may also perform early UL synchronization before the LTM cell switch if this is requested by the network. At the time of the LTM cell switch, the UE 102A uses the transmission configuration indicator, TCI, state, or states, configured for serving cell procedures, and the basic principle is that the UE 102A utilizes the TCI state(s) in the target cell until a new TCI state, or states, is provided in the target cell.

In the illustrated example, an access node 104A, or a distributed unit, provides a cell 121, which is supporting non-unified TCI states, i.e. not supporting unified TCI states, and an access node 104B, or a distributed unit/units, provide a cell 122 which may be a primary cell, and one or more secondary cells 123. As used herein, non-unified TCI states (e.g. TCI states defined in 3GPP NR Release-15 and Release-16), also called as legacy TCI states, provide TCI information for DL signals, or channels, using TCI state information elements, and/or for uplink signals, or channels, using spatial relation information. The spatial relation information is mainly used to is used to provide spatial Tx (transmit) parameter information. Unified TCI states (e.g. TCI states introduced in 3GPP NR Release-17,), called also enhanced TCI states, provide a joint TCI state that can be used for both DL and UL, and separate TCI states. More precisely, a unified TCI state may be a joint (DL/UL) TCI state, or a separate DL TCI state, or a separate UL TCI state, using TCI state information elements. The unified TCI states are also used as the baseline TCI states for configuring, activating and indicating TCI states, also known as candidate TCI states, for candidate target cells.

In the illustrated example, the UE 102A is served by the cell 122, that uses unified TCI states, the cells 121 and 123 are determined by the network to be candidate cells for a lower layer mobility cell switch of the UE 102A, and the cell 121 will be the target cell. To enable smooth lower layer mobility cell switch of the UE 102A, configured with unified TCI states, to the cell 121 using non-unified TCI states, the access node (apparatus) 104A is configured to perform mapping, and reversed mapping between non-unified TCI states and unified TCI states, as will be described in more detail below, so that the TCI state change from the unified TCI state(s) to non-unified TCI state(s) is transparent to the UE 102A. In other words, the UE 102A will use a unified TCI state to derive parameters for a transmission of at least UL message, e.g., RRC Reconfiguration Complete, or for a reception of at least DL message in the cell 121, and only after completion of the LTM cell switch to cell 121, the UE 102A may be configured to use non-unified TCI state(s). In other words, upon the LTM cell switch, the UE 102A will use a unified TCI state to derive parameters for transmissions or/and receptions in the cell 121, until the UE 102A is configured to use non-unified TCI state(s) in the cell 121.

The examples described below use principles and terminology of 5G and 6G radio access technology without limiting the example embodiments to 5G and 6G radio access technology, however. A person skilled in the art may apply the solutions and examples to other communication systems, for example beyond 5G, e.g. 6G, 7G, provided with necessary properties. Further, for the sake of clarity, term device is used for the apparatus, or UE, that may be moving, and the term apparatus is used for a node/unit providing a cell.

Fig. 2 is a flowchart illustrating a non-limiting example functionality of an apparatus that provides at least a cell configured to use non-unified TCI states. The apparatus may be an access node, or a distributed unit, or an apparatus comprised in an access node, or a distributed unit, for example.

Referring to Fig. 2, when the apparatus receives (block 201) a request for unified TCI states in the cell for a lower layer mobility cell switch of a device, it determines (block 202) at least one non-unified TCI state for the device. In other words, one or more non-unified TCI states that are to be used in the cell with the device are determined. The request for unified TCI states in the cell may be a handover request or a context setup request or a context modification request.

Then the apparatus generates (block 203), per a non-unified TCI state, mapping information mapping parameters in the non-unified TCI state to a corresponding unified TCI state comprising mapped parameters. In other words, for the one or more non-unified TCI states, mapping information for corresponding one or more unified TCI states are generated. Further, the mapping information is stored (block 204), for a possible later use. The later use may relate to an early activation, e.g. DL synchronization and/or UL synchronization when the cell is a candidate cell, or the LTM cell switch to the cell, when the cell is a target cell. The apparatus also transmits (block 205) a response to the request, the response comprising a list of corresponding unified TCI states.

The apparatus may apply at least one predefined rule when generating the mapping information. For example, the apparatus may use for the corresponding unified TCI state the same identifier value that the non-unified TCI state has, or the apparatus may use for the corresponding unified TCI state an identifier value that does not depend on an identifier value the non-unified TCI state has, and to store the identifier values to the mapping information, for example in a look-up table. An identifier identifying a TCI state may be called a candidate configuration index.

A predefined rule may comprise a list of parameters to which values should be provided for the unified TCI states and how the values are generated based on the non-unified TCI state. Further examples include that a non-unified DL TCI state is mapped to a joint unified TCI state used for both DL and UL, or a non-unified DL TCI state is mapped to separate unified TCI states, one for DL and one for UL.

Below different non-limiting examples of what a mapping information may comprise are described, to illustrate how a non-unified DL TCI state may be used to build a unified DL TCI state.

Table 1 shows an example mapping information between SSB (synchronization signal block) based TCI states in FR1 (frequency range 1 covering frequencies from 410 MHz to 7125 MHz), assuming independent identifier values. Further, in the example, the predefined rules include that SSB and QCL type of the non-unified TCI state may be used in the unified TCI state, and that the same reference signal may be used for pathloss reference signal.

**Table 1**

| Non-unified TCI state | Mapped unified TCI state |
|---|---|
| TCI-State ::= SEQUENCE { | CandidateTCI-State-r18 ::= SEQUENCE { |
| tci-StateId=N1 | tci-StateId-r18=N2 |
| qcl-Type1= SEQUENCE { | qcl-Type1-r18= SEQUENCE { |
| referenceSignal=SSB-Index=M1 | referenceSignal-r18=SSB-Index=M1 |
| qcl-Type=typeC | qcl-Type-r18=typeC |
| } | } |
| } | pathlossReferenceRS-Id-r18::= SEQUENCE { |
| | pathlossReferenceRS-Id-r17=P1 |
| | referenceSignal-r17=SSB-Index=M1 |
| | } |
| | } |

The list included in the response to the request based on the example of table 1, may be: "ID= N2, qcl-type 1,reference signal = SSB-index = M1, qcl-type=type C, pathloss reference RS ID = P1, reference signal = SSB-index = M1".

A further predefined rule for separate DL and UL unified TCI states may be that the same unified TCI state configuration (i.e. QCL information) can be used for both DL and UL.

Table 2 shows an example mapping information between SSB based TCI states in FR2 (frequency range 2 covering frequencies from 24.25 GHz to 71.0 GHz), assuming independent identifier values. Further, in the example, the additional QCL information, qcl-Type2, is added to provide the information for qcl-Type = typeD. The predefined rules include that SSB and QCL type of the non-unified TCI state may be used in the unified TCI state. The same reference signal used on qcl-Type 1 may be used for pathloss reference signal. A further predefined rule for separate DL and UL unified TCI states may be that the same unified TCI state configuration (i.e. QCL information) can be used for both DL and UL.

**Table 2**

| Non-unified TCI state | Mapped unified TCI state |
|---|---|
| TCI-State ::= SEQUENCE { | CandidateTCI-State-r18 ::= SEQUENCE { |
| tci-StateId=N1 | tci-StateId-r18=N2 |
| qcl-Type1= SEQUENCE { | qcl-Type1-r18= SEQUENCE { |
| referenceSignal=SSB-Index=M1 | referenceSignal-r18=SSB-Index=M1 |
| qcl-Type=typeC | qcl-Type-r18=typeC |
| } | } |
| qcl-Type2= SEQUENCE { | qcl-Type2-r18= SEQUENCE { |
| referenceSignal=SSB-Index=M1 | referenceSignal-r18=SSB-Index=M1 |
| qcl-Type=typeD | qcl-Type-r18=typeD |
| } | } |
| } | pathlossReferenceRS-Id-r18::= SEQUENCE { |
| | pathlossReferenceRS-Id-r17=P1 |
| | referenceSignal-r17=SSB-Index=M1 |
| | } |
| | } |

In the above example, if in the non-unified TCI state, instead of a SSB index, a CSI-RS (channel state information reference signal) index is provided for the referenceSignal qcl-Typ2 with qcl-Type = typeD, then the same information (CSI-RS index) may be used for unified TCI state in referenceSignal-r18 for qcl-Type2-r18.

Table 3 shows an example mapping information between TRS (tracking reference signal, a CSI-RS configured with TRS-info) based TCI states in FR1, assuming independent identifier values. The same QCL information, i.e., TRS ID and QCL type (qcl-Type) in the non-unified TCI state may be used in the QCL information for unified TCI state for reference signal and qcl-Type. For the pathloss reference signal, the SSB which is a QCL source of (or QCLed with) the TRS used in qcl-Type1 may be used. Each TRS (or CSI-RS) is provided with a configuration information of its QCL information in the form of TCI state which further provides a reference signal (QCL source) to be used to receive that TRS. In the example given below SSB-index M is the QCL source reference signal for TRS M2. In another example, if the QCL source RS of the TRS is a CSI-RS (not configured with TRS-info), then the CSI-RS QCLed with the TRS or the SSB QCLed with the CSI-RS which is QCLed with the TRS may be used as pathloss reference signal.

**Table 3**

| Non-unified TCI state | Mapped unified TCI state |
|---|---|
| TCI-State ::= SEQUENCE { | CandidateTCI-State-r18 ::= SEQUENCE { |
| tci-Stateld=N3 | tci-StateId-r18=N4 |
| qcl-Type1= SEQUENCE { | qcl-Type1-r18= SEQUENCE { |
| referenceSignal=csi-rs (NZP-CSI-RS-ResourceId)=M2 | referenceSignal-r18= csi-rs (NZP-CSI-RS-ResourceId)=M2 |
| qcl-Type=typeA | qcl-Type-r18=typeA |
| } | } |
| } | pathlossReferenceRS-Id-r18::= SEQUENCE { |
| | pathlossReferenceRS-Id-r17=P2 |
| | referenceSignal-r17=SSB-Index=M |
| | } |
| | } |

Table 4 shows an example mapping information between TRS based TCI states in FR2, assuming independent identifier values. Further, in this example, the additional QCL information, qcl-Type2, is added to provide the information for qcl-Type = typeD. The information used in the non-unified TCI state may be used in the unified TCI state. In the example shown below, the same TRS is used in both qcl-Type1 and qcl-Type2. In another example, when the reference signal for qcl-Type2 is a CSI-RS (i.e. different from the TRS configured in qcl-Type1) in the non-unified TCI state, then the same CSI-RS may be used for qcl-Type2 in the unified TCI state. The pathloss reference signal information may be derived from the TRS configured in qcl-Type 1 in the same manner as explained in the previous example.

**Table 4**

| Non-unified TCI state | Mapped unified TCI state |
|---|---|
| TCI-State ::= SEQUENCE { | CandidateTCI-State-r18 ::= SEQUENCE { |
| tci-Stateld=N3 | tci-StateId-r18=N2 |
| qcl-Type1= SEQUENCE { | qcl-Type1-r18= SEQUENCE { |
| referenceSignal=csi-rs (NZP-CSI-RS-ResourceId)=M2 | referenceSignal-r18=csi-rs (NZP-CSI-RS-ResourceId)=M2 |
| qcl-Type=typeA | qcl-Type-r18=typeA |
| } | } |
| qcl-Type2= SEQUENCE { | qcl-Type2-r18= SEQUENCE { |
| referenceSignal=csi-rs (NZP-CSI-RS-ResourceId)=M2 | referenceSignal-r18=csi-rs (NZP-CSI-RS-ResourceId)=M2 |
| qcl-Type=typeD | qcl-Type-r18=typeD |
| } | } |
| } | pathlossReferenceRS-Id-r18::= SEQUENCE { |
| | pathlossReferenceRS-Id-r17=P2 |
| | referenceSignal-r17=SSB-Index=M3 |
| | } |
| | } |

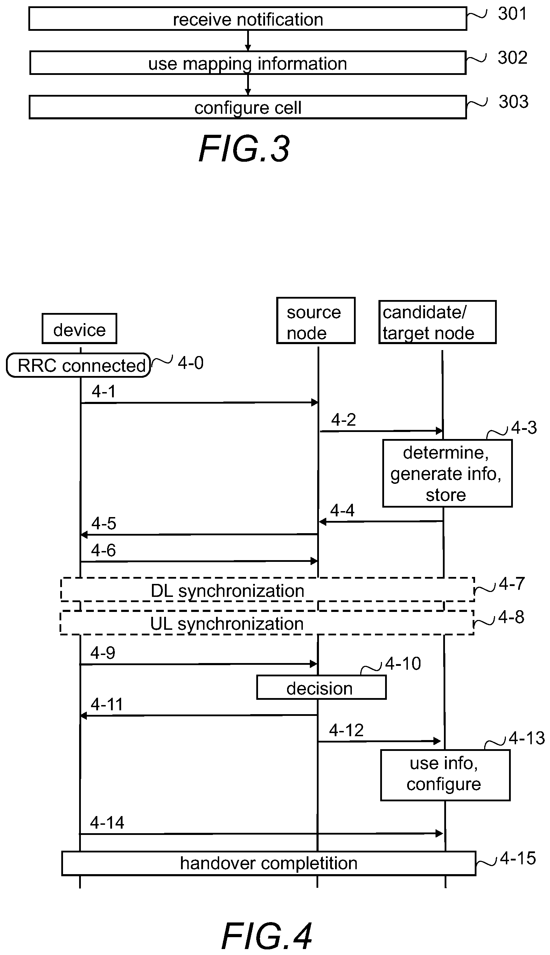

Fig. 3 is a flowchart illustrating a non-limiting example functionality of the apparatus described above with Figure 2, during a cell switch procedure, after the mapping information has been generated and stored, and the response transmitted.

Referring to Fig. 3, when the apparatus receives (block 301) a notification, that the device is to be switched to the cell, the notification indicating at least one unified TCI state, the apparatus uses (block 302), the mapping information to determine, per an indicated unified TCI state, a corresponding non-unified TCI state for the device. In other words, the apparatus performs a reverse mapping. Then the apparatus configures (block 303) the cell to apply in information exchange with the device the corresponding non-unified TCI states. For example, the apparatus may configure its transmission(s)/reception(s) (e.g. beams) according to the corresponding non-unified TCI states, while the device uses unified TCI states to configure it transmission(s)/reception(s). Further, the apparatus may schedule UL and DL transmissions according to the corresponding non-unified TCI states, while the device uses unified TCI states.

For example, assuming that the notification indicates unified TCI state with identifier N2, the apparatus will find the mapping information illustrated in table 2, and performs the reverse mapping of the unified TCI state to the non-unified TCI state, resulting to a QCL-type 1 being type C, and QCL type 2 being type D, both types having reference signal with SSB index M1.In other words, all DL control channels (CORESETs), PDSCH (physical DL shared channel), PUCCH (physical UL control channel), PUSCH (physical UL shared channel) with DL control information DCI 0_0 can follow the QCL information of SSB M1.

Hence, the reverse mapping can be used to determine which non-unified TCI state(s) should be used to schedule the device configured with unified TCI state(s) for operation in the cell provided by the apparatus, when the cell is the target cell.

Fig. 4 illustrates an example information exchange for the lower layer mobility cell switch procedure of a device from a cell supporting the unified TCI states to a cell supporting non-unified TCI states. In the example of Fig. 4, term source node is used for an apparatus providing a serving cell, and the term candidate/target node is used for an apparatus providing a cell supporting non-unified TCI states. The information exchange can be used for intra-gNB-DU LTM cell switch or for inter-gNB-DU LTM cell switch, for example.

Referring to Fig. 4, the device is in RRC connected mode (block 4-0), i.e. connected to a serving cell provided by the source node. The device transmits (message 4-1) an RRC measurement report, based on which the source node starts candidate cell preparation, and transmits (message 4-2) to the candidate/target node an LTM request, i.e. a request for unified TCI states in the cell for a lower layer mobility cell switch of the device. Different examples of the LTM request are described above. The candidate/target node performs (block 4-3) a process described above with Fig. 2. In other words, it determines non-unified TCI state(s), generates the mapping information, stores it and transmits (message 4-4) a response to the request, the response comprising a list of unified TCI state(s) that correspond to the non-unified TCI state(s) determined. The response (message 4-4) may be and LTM request ACK (acknowledgement).

The source node transmits (message 4-5) the list received, possibly also lists received for possible other candidate cells to the device. Message 4-5 may be RRCReconfiguration comprising the list(s) as LTM candidate configuration(s). The device stores the LTM candidate configurations, and transmits RRCReconfigurationComplete (message 4-6) to the source node.

If requested by the source node, the device may perform DL synchronization (block 4-7) with the candidate cell provided by the candidate/target node, via early TCI activation, using the stored LTM candidate configuration. Correspondingly, if requested by the source node, the device may perform UL synchronization (block 4-8) with the candidate cell provided by the candidate/target node, via the early TCI activation, using the stored LTM candidate configuration.

Purpose of the early TCI activation, or early candidate TCI activation, is to trigger the device to start fine time/frequency synchronization with the indicated joint or/and UL unified TCI state(s) of the candidate cell, reverse-mappable to non-unified TCI state(s). The early TCI activation can be seen as a pre-DL/UL-synchronization aiming to prepare the device for LTM cell switch and enable shorter interruption at cell switch. The source node can trigger the activation for a candidate target cell based on measurements reported by the device. As the measurement reports from the device include reference signal information, the source node can determine the corresponding unified TCI states. Once the unified TCI state(s) are selected, the source node transmits to the device a candidate TCI state activation command containing the unified TCI state(s) and candidate cell information. Upon receiving this TCI state activation command, the device is expected to start tracking the reference signals and acquire and maintain the associated QCL parameters. The network assumes a specific time (i.e., TCI state activation delay) before it is considered that the device has acquired all necessary parameters and is ready to use the unified TCI state for transmission and/or reception. As to the candidate cell supporting non-unified TCI states, for early TCI state activation, the candidate cell supposed to transmit the reference signals configured in the given unified TCI states.

The device performs L1 measurements on the configured candidate cell(s) and transmits (message 4-9) measurement report(s) to the source node. The measurement report may be a L1 measurement report comprising CSI report.

In the illustrated example of Fig. 4, the source node makes an LTM trigger decision (block 4-10). In other words, the source node decides (block 4-10) to execute a cell switch to a target cell, which is the cell (the candidate cell) provided by the candidate/target node. The decision includes the source node determining (selecting) one unified joint TCI state to be used, or if separate DL and UL unified TCI states are used, one DL unified TCI state and one UL unified TCI state to be used. When the decision is made, the source node transmits (message 4-11) to the device a cell switch command, for example in MAC CE, the cell switch command indicating the selected unified TCI state(s). For example, the cell switch command may comprise identifier value(s) of the selected unified TCI states. Correspondingly, the source node transmits (message 4-14) to the candidate/target node a cell switch notification indicating the selected unified TCI state(s).

The device executes the LTM cell switch as if the target cell would use unified TCI states. However, the candidate/target node uses (block 4-13) the mapping information for reverse mapping, to determine the corresponding non-unified TCI state(s), as described above with Fig. 3, that are to be used with the device, and configures (block 4-13), using the non-unified TCI state(s) the cell correspondingly to receive transmissions from the device and to transmit to the device.

The device completes the LTM cell switch by transmitting (message 4-14) RRC ReconfigurationComplete message to the candidate/target node.

The handover completion (block 4-15) may include that the candidate/target node determines for the device non-unified TCI state(s), or use the earlier determined non-unified TCI states, and receives an RRCReconfigurationComplete message indicating the non-unified TCI state(s) from the device, which then starts to apply them. After that, there is no need for the candidate/target node to perform the reverse mapping. In another example, the target node may send a DL message to the UE containing the UL grant to the UE to send the RRCReconfigurationComplete message. In this case, the target node uses the determined non-unified TCI states to transmit the DL message.

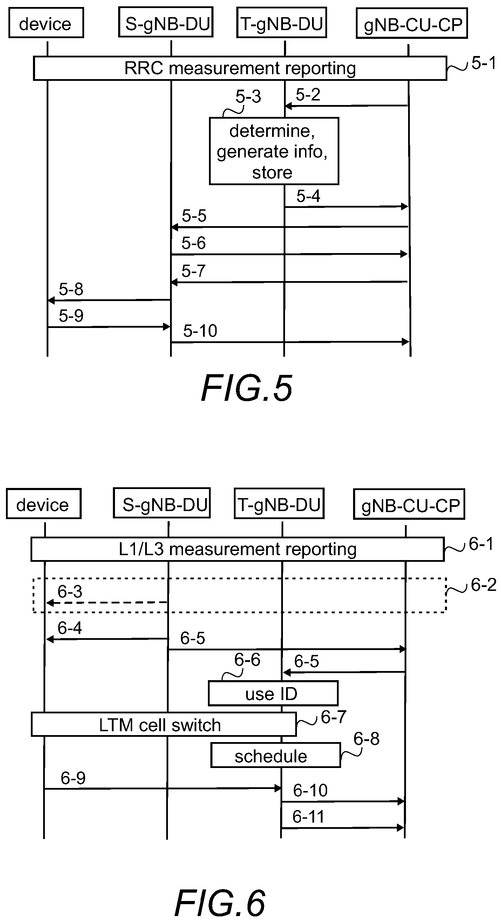

Fig. 5 illustrates an example information exchange during an intra-gNB inter-DU lower layer mobility cell switch preparation, the S-gNB-DU depicting a source cell supporting unified TCI states and the T-gNB-DU depicting a candidate cell supporting non-unified TCI states. The device may be a 5G UE.

Referring to Fig. 5, RRC measurement reporting is performed (block 5-1). For example, "RRC: MeasurementReport for LTM preparation" may be transmitted. Based on the measurement results, the gNP-CU-CP transmits (message 5-2) "F1: UEContextSetupRequest" to the T-gNB-DU. The T-gNB-DU performs (block 5-3) a process described above with Fig. 2. The process may be called a proprietary mapping "non-unified TCI to unified TCI". In other words, the T-gNB-DU determines non-unified TCI state(s), generates the mapping information, stores it and then transmits (message 5-4) a response "F1: UeContextSetupResponse", which comprises a list of unified TCI state(s), i.e. a unified TCI states configurations list, to the gNP-CU-CP. The gNP-CU-CP then transmits (message 5-5) to the S-gNB-DU a request "F1: UeContextModificationRequest", which comprises the unified TCI configurations list. The S-gNB-DU transmits (message 5-6) to the gNP-CU-CP a response "F1: UeContextModificationResponse ". The gNP-CU-CP transmits (message 5-7) to the S-gNB-DU a message "F1: DIRrcMessage Transfer". After receiving the message, the S-gNB-DU transmits (message 5-8) to the device a message "RRC: RRCReconfiguration" informing the device on the unified TCI states, for example as "ltm-TCI-Info-r18". The device transmits (message 5-9) to the S-gNB-DU a message "RRC: RRCReconfigurationComplete". After receiving the message, the S-gNB-DU transmits (message 5-10) to the gNP-CU-CP a message "F1: UIRrcMessage Transfer".

Fig. 6 illustrates an example information exchange during an intra-gNB inter-DU lower layer mobility cell switch execution, the S-gNB-DU depicting a source cell supporting unified TCI states and the T-gNB-DU depicting a candidate cell supporting non-unified TCI states. The device may be a 5G UE.

Referring to Fig. 6, measurement reporting is performed (block 6-1). For example, L1 measurement report (without involvement of the gNB-CU-CP) or L3 measurement report (with involvement of the gNB-CU-CP) may be transmitted. Further, LTM early synchronization may be performed (optional block 6-2). If performed, in the illustrated example it is assumed that the S-gNB-DU supports candidate TCI Activation/Deactivation MAC CE, and may transmit (message 6-3) to the device for the DL synchronization "TCI State Activation MAC CE" for unified TCI state(s).

Further, in the illustrated example it is assumed that the S-gNB-DU supports transmitting LTM CSC (cell switch command) MAC-CE with LTM TCI state indication, i.e. with unified TCI state indication, and transmits (message 6-4) to the device a cell switch command, e.g. "Cell Switch Command (CSC) MAC CE" comprising TCI State ID, i.e. an identifier value of a unified TCI state, and optionally TA_target-cell to inform the device of the timing advance TA in the T-gNB-DU. The TCI State ID is also transmitted (messages 6-5) from the S-gNB-DU to the gNB-CU-CP to the T-gNB-DU, which then uses (block 6-6) the identifier (ID) for reverse mapping "unified TCI to non-unified TCI" during the lower layer mobility cell switch execution. The reverse mapping may be a proprietary reverse mapping. Then in the illustrated example, the LTM cell switch is performed (block 6-7). The LTM cell switch (the lower layer mobility cell switch) may be a random access based or random access less LTM cell switch. After the LTM cell switch to the target cell (t-gMN-DU), the device is able to support both unified TCI states and non-unified TCI states, assuming that the device capabilities include backward capability to use legacy states. Further, after the LTM cell switch, the T-gNB-DU schedules (block 6-8) DL and UL for the device according to the received TCI state ID (using the reverse mapping).

The device transmits (message 6-9) to the T-gNB-DU a message "RRC: RRCReconfigurationComplete". After receiving the message, the T-gNB-DU transmits (message 6-10) to the gNP-CU-CP a message "F1: UIRrcMessage Transfer", and a message (message 6-11) "F1: AccessSuccess".

The blocks and related functions and information exchange described above by means of Fig. 1 to Fig. 6 are in no absolute chronological order, and some of them may be performed simultaneously or in an order differing from the given one. Other functions can also be executed between them or within them, and other information may be transmitted, and/or other rules applied. Some of the blocks or part of the blocks or one or more pieces of information can also be left out or replaced by a corresponding block or part of the block or one or more pieces of information. Furthermore, some of the blocks in one example may be combined with another example.

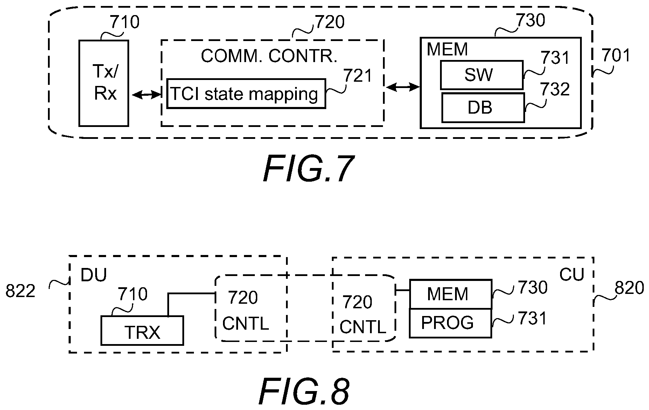

Fig. 7 illustrates an apparatus 701 according to some embodiments. The apparatus 701 may be any apparatus, or electronic device, that may be configured to generate mapping information between non-unified and unified TCI states and to use the mapping information for reverse mapping. Different examples of such apparatuses are described above. Fig. 8 illustrates an apparatus that may implement distributed functionality of the apparatus illustrated in Fig. 7.

The apparatus 701may comprise one or more communication control circuitries 720, such as at least one processor, and at least one memory 730 including one or more algorithms 731, such as a computer program code (software, SW, or instructions), wherein the at least one memory and the computer program code (software) are configured, with the at least one processor, to cause the apparatus to carry out any one of the exemplified functionalities of a corresponding apparatus, described above with any of Fig. 1 to Fig. 6. Said at least one memory 730 may also comprise at least one database (DB) 732.

According to an embodiment, there is provided an apparatus providing at least a cell configured to use non-unified transmission configuration indicator, TCI, states, the apparatus comprising means for receiving a request for unified TCI states in the cell for a lower layer mobility cell switch of a device; means for determining at least one non-unified TCI state for the device; means for generating, per a non-unified TCI state, mapping information mapping parameters in the non-unified TCI state to a corresponding unified TCI state comprising mapped parameters; means for storing the mapping information; and means for transmitting in a response to the request a list of corresponding unified TCI states.

Referring to Fig. 7, the one or more communication control circuitries 720 of the apparatus 701 comprise at least a TCI state mapping circuitry 721, which is configured at least to generate mapping information, and possibly use the mapping information, as discussed for example with Fig. 2 to Fig. 6. To this end, the TCI state mapping circuitry 721 of the apparatus 701 is configured to carry out at least some of the functionalities described above, e.g., by means of Fig. 2 to Fig. 6, for example, using one or more individual circuitries.

Referring to Fig. 7, the memory 730 may be implemented using any suitable data storage technology, such as semiconductor based memory devices, flash memory, magnetic memory devices and systems, optical memory devices and systems, fixed memory and removable memory.

Referring to Fig. 7, the apparatus 701 may further comprise different interfaces 710 such as one or more communication interfaces (TX/RX) comprising hardware and/or software for realizing communication connectivity according to one or more communication protocols. The one or more communication interfaces 710 may enable connecting to the Internet and/or to a core network of a wireless communications network and/or to a radio access network and/or to other apparatuses within range of the apparatus. The one or more communication interface 710 may provide the apparatus with communication capabilities to communicate in a cellular communication system and enable communication to different network nodes or elements or devices, for example. The one or more communication interfaces 710 may comprise standard well-known components such as an amplifier, filter, frequency-converter, (de)modulator, and encoder/decoder circuitries, controlled by the corresponding controlling units, and one or more antennas.

In an embodiment, as shown in Fig. 8, at least some of the functionalities of the apparatus of Fig. 7 may be shared between two physically separate devices, forming one operational entity. Therefore, the apparatus may be seen to depict the operational entity comprising one or more physically separate devices for executing at least some of the described processes. Thus, the apparatus of Fig. 8, utilizing such shared architecture, may comprise a remote control or central unit CU 820, such as a host computer or a server computer, operatively coupled (e.g. via a wireless or wired network) to a remote distributed unit DU 822 located in an access device, for example. In an embodiment, at least some of the described processes may be performed by the CU 820. In an embodiment, the execution of at least some of the described processes may be shared among the DU 822 and the CU 820.

Similar to Fig. 7, the apparatus of Fig. 8 may comprise one or more communication control circuitry (CNTL) 720, such as at least one processor, and at least one memory (MEM) 730, including one or more algorithms (PROG) 731, such as a computer program code (software SW, or instructions) wherein the at least one memory and the computer program code (software, instructions) are configured, with the at least one processor, to cause the apparatus to carry out any one of the exemplified functionalities described above, e.g., by means of Fig. 1 to Fig. 6, for example.

In embodiments, the CU 820 may generate a virtual network through which the CU 820 communicates with the DU 822. In general, virtual networking may involve a process of combining hardware and software network resources and network functionality into a single, software-based administrative entity, a virtual network. Network virtualization may involve platform virtualization, often combined with resource virtualization. Network virtualization may be categorized as external virtual networking which combines many networks, or parts of networks, into the server computer or the host computer (e.g. to the CU). External network virtualization is targeted to optimized network sharing. Another category is internal virtual networking which provides network-like functionality to the software containers on a single system.

In an embodiment, the virtual network may provide flexible distribution of operations between the DU and the CU. In practice, any digital signal processing task may be performed in either the DU or the CU and the boundary where the responsibility is shifted between the DU and the CU may be selected according to implementation.

As used in this application, the term 'circuitry' may refer to one or more or all of the following: (a) hardware-only circuit implementations, such as implementations in only analog and/or digital circuitry, and (b) combinations of hardware circuits and software (and/or firmware), such as (as applicable): (i) a combination of analog and/or digital hardware circuit(s) with software/firmware and (ii) any portions of hardware processor(s) with software, including digital signal processor(s), software, and memory(ies) that work together to cause an apparatus, such as an access device or node or a network node or network entity, to perform various functions, and (c) hardware circuit(s) and processor(s), such as a microprocessor(s) or a portion of a microprocessor(s), that requires software (e.g. firmware) for operation, but the software may not be present when it is not needed for operation. This definition of 'circuitry' applies to all uses of this term in this application, including any claims. As a further example, as used in this application, the term 'circuitry' also covers an implementation of merely a hardware circuit or processor (or multiple processors) or a portion of a hardware circuit or processor and its (or their) accompanying software and/or firmware. The term 'circuitry' also covers, for example and if applicable to the particular claim element, a baseband integrated circuit for an access node or other computing or network device.

In an embodiment, at least some of the processes described in connection with Fig. 1 to Fig. 6 may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments of Fig. 1 to Fig. 6 or operations thereof.

Embodiments and examples as described may also be carried out in the form of a computer process defined by a computer program or portions thereof. Embodiments of the functionalities described in connection with Fig. 1 to Fig. 6 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. The term "non-transitory," as used herein, is a limitation of the medium itself (i.e., tangible, not a signal ) as opposed to a limitation on data storage persistency (e.g., random access memory RAM vs. read only memory ROM). Coding of software for carrying out the embodiments as shown and described is well within the scope of a person of ordinary skill in the art.

Even though the embodiments have been described above with reference to examples according to the accompanying drawings, it is clear that the embodiments are not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. An apparatus (701) comprising:
at least one processor; and
at least one memory (730) storing instructions that, when executed by the at least one processor, cause the apparatus to at least:
provide at least a cell configured to use non-unified transmission configuration indicator, TCI, states;
receive a request for unified TCI states in the cell for a lower layer mobility cell switch of a device;
determine at least one non-unified TCI state for the device;
generate, per a non-unified TCI state, mapping information mapping parameters in the non-unified TCI state to a corresponding unified TCI state comprising mapped parameters;
store the mapping information; and
transmit in a response to the request a list of corresponding unified TCI states.

2. The apparatus (701) of claim 1, wherein the at least one memory (730) and computer program code are configured to, with the at least one processor, further cause the apparatus to use for the corresponding unified TCI state the same identifier value that the non-unified TCI state has.

3. The apparatus (701) of claim 1, wherein the at least one memory (730) and computer program code are configured to, with the at least one processor, further cause the apparatus to use for the corresponding unified TCI state an identifier value that does not depend on an identifier value the non-unified TCI state has, and to store the identifier values to the mapping information.

4. The apparatus (701) of any of the preceding claims, wherein the at least one memory (730) and computer program code are configured to, with the at least one processor, further cause the apparatus to:
receive a notification that the device is to be switched to the cell, the notification indicating at least one unified TCI state;
use the mapping information to determine, per an indicated unified TCI state, a corresponding non-unified TCI state for the device; and
configure the cell to apply in information exchange with the device the corresponding non-unified TCI states.

5. The apparatus (701) of claim 4, wherein the at least one memory (730) and computer program code are configured to, with 5 the at least one processor, further cause the apparatus to schedule uplink and downlink transmissions according to the corresponding non-unified TCI states.

6. The apparatus (701) of any of the preceding claims, wherein the request for unified TCI states in the cell is a handover request or a context setup request or a context modification request.

7. The apparatus (701) of any of the preceding claims wherein the at least one memory (730) and computer program code are configured to, with the at least one processor, further cause the apparatus to apply at least one predefined rule when generating the mapping information.

8. A method comprising at least:
receiving (201), by an apparatus providing at least a cell configured to use non-unified transmission configuration indicator, TCI, states, a request for unified TCI states in the cell for a lower layer mobility cell switch of a device;
determining (202), by the apparatus, at least one non-unified TCI state for the device;
generating (203), by the apparatus, per a non-unified TCI state, mapping information mapping parameters in the non-unified TCI state to a corresponding unified TCI state comprising mapped parameters;
storing (204), by the apparatus, the mapping information; and
transmitting (205), by the apparatus, in a response to the request a list of corresponding unified TCI states.

9. The method of claim 8, further comprising:
receiving (301), by the apparatus, a notification that the device is to be switched to the cell, the notification indicating at least one unified TCI state;
using (302), by the apparatus, the mapping information to determine, per an indicated unified TCI state, a corresponding non-unified TCI state for the device; and
configuring (303), by the apparatus, the cell to apply in information exchange with the device the corresponding non-unified TCI states.

10. The method of claim 9, further comprising:
scheduling, by the apparatus, uplink and downlink transmissions according to the corresponding non-unified TCI states.

11. A computer readable medium comprising program instructions which, when executed by an apparatus providing at least a cell configured to use non-unified transmission configuration indicator, TCI, states, cause the apparatus to perform at least:
determining, in response to receiving a request for unified TCI states in the cell for a lower layer mobility cell switch of a device, at least one non-unified TCI state for the device;
generating, per a non-unified TCI state, mapping information mapping parameters in the non-unified TCI state to a corresponding unified TCI state comprising mapped parameters;
storing, by the apparatus, the mapping information; and
causing transmitting, in a response to the request a list of corresponding unified TCI states.

12. The computer readable medium of claim 11, further causing the apparatus to perform:
using, when receiving a notification that the device is to be switched to the cell, the notification indicating at least one unified TCI state, the mapping information to determine, per an indicated unified TCI state, a corresponding non-unified TCI state for the device; and
configuring the cell to apply in information exchange with the device the corresponding non-unified TCI states.

13. The computer readable medium of claim 11 or 12, wherein the computer readable medium is a non-transitory computer readable medium.

14. A computer program comprising instructions which, when executed by an apparatus, cause the apparatus to perform at least:
determining, in response to receiving a request for unified TCI states in the cell for a lower layer mobility cell switch of a device, at least one non-unified TCI state for the device;
generating, per a non-unified TCI state, mapping information mapping parameters in the non-unified TCI state to a corresponding unified TCI state comprising mapped parameters;
storing, by the apparatus, the mapping information; and
causing transmitting, in a response to the request a list of corresponding unified TCI states.

15. The computer program of claim 14, further causing the apparatus to perform:
using, when receiving a notification that the device is to be switched to the cell, the notification indicating at least one unified TCI state, the mapping information to determine, per an indicated unified TCI state, a corresponding non-unified TCI state for the device; and
configuring the cell to apply in information exchange with the device the corresponding non-unified TCI states.
